# EUROPÄISCHE PATENTANMELDUNG

(11) **EP 2 746 750 A1**
(43) Veröffentlichungstag der Anmeldung: **25.06.2014**
(21) Anmeldenummer: 12199312.5
(22) Anmeldetag: 22.12.2012
(51) Int. Cl.: G01N 21/84, G02B 21/36

(54) **PoC-Testsystem und -verfahren mit mobiler Rechnereinheit**

(71) Anmelder: Zendia GmbH, 22559 Hamburg (DE)
(72) Erfinder: Lindemann, Björn, 22397 Hamburg (DE); Böse, Guido, 48324 Sendenhorst-Albersloh (DE)
(74) Vertreter: Simandi, Claus

(57) **Zusammenfassung**

Die vorliegende Erfindung betrifft ein Testsystem und Testverfahren und dessen Verwendung, insbesondere im Point-of-Care (PoC) Bereich, wobei eine mobile Rechnereinheit aufweisend eine Bildverarbeitungsvorrichtung angeordnet an einer optischen Vergrößerungseinheit zur Analyse von Körperflüssigkeiten verwendet wird.

## Beschreibung

Die vorliegende Erfindung betrifft ein Testsystem und Testverfahren und dessen Verwendung, insbesondere im Point-of-Care (PoC) Bereich, wobei eine mobile Rechnereinheit aufweisend eine Bildverarbeitungsvorrichtung angeordnet an einer optischen Vergrößerungseinheit zur Analyse von Körperflüssigkeiten verwendet wird.

In der Forschung, Diagnostik, oder einer Vielzahl weiterer Anwendungsfelder stellen analytische Labortests, die zur qualitativen oder/und quantitativen Bestimmung von Zellen, Molekülen, Liganden, Analyten bzw. deren Aktivität oder Zusammensetzung dienen, die Basis für weitreichende Aussagen bis hin zur Entwicklung neuer Verfahren oder Vorrichtungen dar. Die Basis sind die allgemein bekannten Methoden der DNA/RNA Analytik bzw. der Proteinanalytik. Ein weiteres Beispiel sind die Vielzahl von analytischen Verfahren und Methoden, die eingesetzt werden, um die Antikörperreaktionen, sogenannte Immunreaktionen, welche für die Bestimmung von (Bio)Markern und vielen weiteren Substanzen/Analyten eingesetzt werden. Weiterhin sind mikroskopiegestützte Verfahren auf dem Gebiet der Diagnostik beschrieben.

Patientennahe oder "Point-of-Care" (PoC) Testverfahren sind diagnostische Untersuchungen, die nicht in einem Zentrallabor, sondern innerhalb kurzer Zeit vor Ort direkt und individuell am Patienten/Probanden durchgeführt werden können.

Es gibt für einige wenige Parameter PoC-Testsysteme wie immunchromatographische Teststreifen, die über eine Antikörperbindung ein lösliches Biomolekül z.B. ein Hormon oder ein Protein in Blut, Urin oder Speichel mit Hilfe einer Farbreaktion nachweisen. Bekannte PoC-Teststreifen sind beispielsweise Schwangerschaftstests oder Blutgerinnungstests, die mit oder ohne Messgerät angeboten werden. Ferner sind zugehörige Schnelltestverfahren bekannt, wie der Lateral-Flow-Test (LFT), Flow-Through-Test (FTT), Agglutinations-Test (AT) oder Solid-Phase-Test (SPT). Alle diese Verfahren dienen zum schnellen Nachweis von Analyten und sind zur visuellen Auswertung im PoC-Bereich geeignet.

Im PoC-Bereich ist eine robuste und schnelle Diagnostik erforderlich, die den besonderen Bedürfnissen z.B. der Notfallmedizin nachkommen, eine hohe Mobilität und/oder Konnektivität zu medizinisch behandelndem Fachpersonal erfordern.

Es gibt jedoch keine PoC-Tests für eine große Zahl der zum Teil lebensbedrohlichen Erkrankungen, die Gegenstand einer Erreger- oder Zelldiagnostik sind. Hierzu gehören schwere bakterielle Infektionen, die zu einer Sepsis führen können, Erkrankungen wie Malaria, Cholera und Tuberkulose oder zur Quantifizierung bestimmter Blutzellen, z.B. von Lymphozyten, eines Krebspatienten. Für die Erreger- und Zelluntersuchungen ist eine apparativ und personell aufwändige Untersuchung im diagnostischen Labor unumgänglich, die entsprechend zeit- und kostenintensiv ist und zudem einen verzögerten Beginn einer individuell abgestimmten Behandlung oder Therapie verursacht.

Am Beispiel der Malaria ist eine erforderliche Erreger- und Zelldiagnostik erläutert:
Für das Jahr 2010 wurden 216 Millionen Fälle von Malariaerkrankungen aus 106 Ländern gemeldet. In 2010 starben nach Angaben der WHO weltweit 655.000 Menschen an Malaria - der Großteil davon Kinder unter 3 Jahren. Mit weltweit mehr als 90 % wird diese Erkrankung durch den Endoparasiten *Plasmodium falciparum* ausgelöst, wobei die nicht oder nicht ausreichend behandelte Erkrankung in den meisten Fällen tödlich verläuft.

Die Standardmethode zur Diagnose einer Malaria basiert im Stand der Technik auf der Mikroskopie. Es wird eine kleine Menge Blut abgenommen, wovon ein Ausstrich oder ein Präparat als so genannter dicker Tropfen angefertigt und mit Giemsa-Farbstoff gefärbt wird. Nach Fixierung und Trocknung des Präparats kann der Parasit unter dem Mikroskop in den roten Blutkörperchen (Erythrozyten) erkannt und vom Fachmann differenziert werden.

Diese Methode setzt nicht nur einen geschulten Durchführenden, sondern auch ein Laborumfeld und ein teures Mikroskop voraus. In den meisten Malaria-Gebieten ist ein derart ausgestattetes Labor ohnehin nicht vorhanden.

Vorhandene molekularbiologische Tests sind zudem teuer und erfordern ebenfalls tiefergehende Anwenderkenntnisse.

Ebenfalls bekannt sind Lateral-Flow-Schnelltests (supra), die zwar parasitenspezifische Antigene, nicht jedoch den Parasiten als solchen oder befallene Zellen nachweisen können und von daher keine Erreger- oder Zelldiagnostik erlauben.

Von daher sind solche Systeme speziell von Interesse, die eine leistungsfähige mobile Rechnereinheit (z.B. Smartphone) aufweisen, wie z.B. in DE202010007208U1 im Stand der Technik beschrieben. Solche Testsysteme werden beispielsweise zur Bestimmung von Blutzucker verwendet, wobei ein Teststreifen mit Patientenblut z.B. elektrochemisch gemessen wird und einfache Analysen durchgeführt werden. Eine geeignete Erreger- und Zelldiagnostik sind für Testsysteme, die eine mobile Rechnereinheit aufweisen, jedoch nicht beschrieben.

Es besteht jedoch ein hohes Bedürfnis ein Testsystem mit einer mobilen Rechnereinheit bereitzustellen, dass eine komplexe Diagnostik erlaubt.

Die komplexe Diagnostik soll insbesondere eine Erreger- und Zelldiagnostik aus Körperflüssigkeiten ermöglichen.

Daher ist es Aufgabe der vorliegenden Erfindung ein Testsystem bereitzustellen, welches eine effektive Erreger- und Zelldiagnostik aus Körperflüssigkeiten im PoC-Bereich ermöglicht.

Die Aufgabe der vorliegenden Erfindung wird dadurch gelöst, dass ein
Testsystem bereitgestellt wird, umfassend eine
i.) mobile Rechnereinheit
ii.) eine Bildverarbeitungsvorrichtung angeordnet an mindestens einer optischen Vergrößerungseinheit und iii.) Mittel zur Auf(- und Ent)nahme eines Teststreifens aufweisend eine Körperflüssigkeit einer (Patienten-/Probanden-) Probe.

Weiterhin ist vorgesehen, dass der Teststreifen in der Weise angeordnet ist, dass die Bildverarbeitungsvorrichtung samt mindestens einer optischen Vergrößerungseinheit eine optische Auslesung (read-out) der Körperflüssigkeit erlaubt.

In einer bevorzugten Ausführungsform ist die optische Vergrößerungseinheit auf den Teststreifen ausgerichtet bzw. angeordnet, so dass eine Abbildung bzw. ein Bild oder Serienbild oder bewegtes Bild (auch Video genannt), vorzugsweise mindestens ein Kontrastbild in Gegenwart des Teststreifens erfolgt und von der Bildverarbeitungsvorrichtung das erlangte Bild erfasst und von der mobilen Rechnereinheit ausgelesen wird.

Weiterhin ist bevorzugt, dass der planare Teststreifen mit einer ersten Oberfläche der optischen Vergrößerungseinheit enthaltend mindestens ein Objektiv, mindestens einem Objektiv zur Objektivachse lotrecht angeordnet ist.

Im Rahmen der vorliegenden Erfindung bedeutet "mobile Rechnereinheit" eine solche Einheit, die beispielsweise durch ein Mobiltelefon mit Rechnerfunktion (im Handel beispielsweise als "Smartphone" erhältlich) oder durch einen Laptop- oder Tablettrechner (im Handel häufig als "Tablet" oder "Tablet-Computer" erhältlich) zur Verfügung gestellt werden, welche besonders bevorzugt bereits eine integrierte Bildverarbeitungsvorrichtung enthalten ("iPod®, iPhone®, Android®, iPad®, Windows® Phone" u.v.a.).

Die mobile Rechnereinheit weist im Wesentlichen eine Zentraleinheit, auch als Prozessor bezeichnet, auf, die alle zur Bildverarbeitung erforderlichen Rechen- und Prozessschritte ausführen kann.

Ferner soll eine Bildverarbeitungsvorrichtung erfindungsgemäß zur mobilen Rechnereinheit angeordnet sein, insbesondere in Form einer Kamera. Die Bildverarbeitungsvorrichtung kann dazu verwendet werden, Bilddaten von einer optischen Vergrößerungseinheit zu erfassen. Dies kann durch Abfotografieren des von der optischen Vergrößerungseinheit erzeugten Bildes geschehen. Besonders wenn die optische Vergrößerungseinheit eine für eine Kamera optimierte Optik aufweist, ist dies ein sehr zweckmäßiger Weg. Bevorzugt sind Digitalkameras, also solche mit einem Bildsensor, dessen Daten an ein digitales Speichermedium ausgegeben werden. Der Bildsensor kann ein gängiger CCD-Sensor sein. Ein CMOS-Sensor kann ebenfalls eingesetzt werden, ist jedoch nicht erforderlich. Vor dem Sensor können zweckmäßigerweise Filter platziert sein, beispielsweise ein Infrarot-, ein Tiefpass- und/oder ein Farbfilter.

Das digitale Speichermedium kann der Bildverarbeitungsvorrichtung zugeordnet sein, das heißt physisch an die Optik angrenzend platziert sein und/oder nur von der Bildverarbeitungsvorrichtung erfasste Bilddaten speichern. Es kommt daher in Frage, dass eine Bildverarbeitungsvorrichtung auch in einem separaten Gehäuse untergebracht ist und kabellos oder über Kabel Daten an die mobile Rechnereinheit liefert. Erfindungsgemäß bevorzugt ist jedoch eine integrierte Lösung, wobei ein Speichermedium eingesetzt werden kann, welches ebenfalls anderen Anwendungen dient. Dies kann zum Beispiel in einem Smartphone der Fall sein, wo Speicherplatz für viele Zwecke vorgesehen ist.

Die Bildverarbeitungsvorrichtung kann in einem Aufnahmemodus für Einzelbilder, Serienbilder oder bewegte Bilder (auch Video) betrieben werden. Bei der Aufnahme von Serienbildern werden nach einer Auflösung mehrere Bilder in einem festen Zeitabstand, beispielsweise fünf Bilder in einem Zeitabstand von einer Sekunde, aufgenommen. Aufgrund einer solchen Bildserie lassen sich Veränderungen des Bildobjektes gut erkennen. Wenn angenommen werden kann, dass sich das Objekt nicht verändert, kann ein Vergleich der verschiedenen Bilder dazu dienen, die Bildqualität zu erhöhen.

Im Rahmen der vorliegenden Erfindung ist eine Bildverarbeitung grundsätzlich vorgesehen. Hierzu muss ein Speichermedium für Bilddaten und ein Prozessor zur Verfügung gestellt werden. Aktuelle Smartphones als mobile Rechnereinheit sind beispielsweise mit ausreichenden Prozessoren ausgestattet, häufig schon mit vier Prozessorkernen (Quad-Core), was wünschenswert, aber nicht erforderlich ist. Für den Prozessor ist eine Taktrate von mehr als 0,5 GHz wünschenswert. Dies wird ebenfalls durch aktuelle Smartphones oder Tablet-Computer (supra) erreicht.

Zur erfindungsgemäßen Verarbeitung der Bilddaten ist ein Bildverarbeitungsprogramm erforderlich. Es ist möglich, aber meist nicht erforderlich, alle vom Programm durchzuführenden Operationen eigens zu programmieren. Es kommt daher in Betracht, eine umfangreiche Bildverarbeitungssoftware einzusetzen, welche die Anpassung an die Erfordernisse der Erfindung erlaubt, beispielsweise durch frei programmierbare Routinen. Insbesondere Smartphones bieten Betriebssysteme, die das Programmieren und den Einsatz von kleinen, auf eine Funktion hin optimierten Programmen erlauben ("Apps"). Grundfunktionen des Programmes (etwa die Handhabung von Daten) können in solchen Betriebssystemen mit sehr kleinem Programmieraufwand angelegt werden. Daher sind solche Apps besonders geeignet, die die Bildverarbeitung im Rahmen der vorliegenden Erfindung übernehmen.

Die Bildverarbeitung ist gegebenenfalls auf einen Analysemodus hin auszulegen. Es kommt erfindungsgemäß nicht darauf an, einzelne Strukturen eines Bildes genau und scharf darzustellen und/oder zu analysieren, sondern vielmehr darauf, summarisch Farbwerte oder Farbkontraste, vorzugsweise Fluoreszenzfarben, in einem Bildausschnitt zu erfassen. Die Erfassung kann dabei qualitativ sein, ist jedoch in der Regel auch quantitativ. Im Rahmen einer einfachen quantitativen Auswertung kann beispielsweise ausgesagt werden, ob ein festgelegter kritischer Wert von eingefärbten Bereichen überschritten wird. Die Bildauswertung kann vorzugsweise integrativ geschehen, indem die Summe oder das Integral bestimmter Farbwerte oder Farbkontrasten relativ zu allen anderen Werten im Bildausschnitt berechnet wird. Bei den bestimmten Farbwerten oder Farbkontrasten handelt es sich zweckmäßigerweise um ein enges Intervall von Farbwerten, es kann sich jedoch im Einzelfall ebenfalls um einen einzelnen Farbwert handeln. Solche Farbwerte können auf einer üblichen Farbskala, beispielsweise einer RAL-Skala, festgelegt werden, bzw. das Vorgehen erlaubt die Ermittlung von Farbkontrasten bzw. von relativen Farbkontrasten, ggfs. im Sinne eines Verhältnisses einer oder mehrerer Farbwerte. Von daher wird im Rahmen dieser Erfindung im weitesten Sinne synonym von Farbwerten und Farbkontrasten gesprochen.

Die Qualität der Bildverarbeitung lässt sich erhöhen, indem nacheinander einzelne Bildausschnitte eines größeren Feldes untersucht werden. Dies kann durch reine Auswahl in der Bildverarbeitung geschehen. Dies kann alternativ oder zusätzlich auch durch optische Vergrößerung jeweils eines Bildausschnittes geschehen ("zoomen"). Dies kann alternativ oder zusätzlich ebenfalls durch mechanische Bewegung der Probe relativ zur erfindungsgemäß ausgelegten Optik, wie oben beschrieben, geschehen (siehe unten: "dynamische Methode"). Ein Vorbeifließen oder Transport der Probe bzw. Teststreifens relativ zur erfindungsgemäß ausgelegten Optik ist besonders bevorzugt. Dies erlaubt vorteilhaft eine vollständige Erfassung einer erfindungsgemäßen Probe zur Bildverarbeitung.

Die Bildverarbeitung kann unmittelbar vorteilhaft während dieses Transports geschehen, oder während des Transports können Bildserien (auch: Video) aufgenommen werden, die anschließend ausgewertet werden.

Im Rahmen der Bildauswertung kann auch eine Qualitätsanalyse durchgeführt werden. Dabei kann die Standardabweichung der Ergebnisse in mehreren Bildausschnitten errechnet werden. Es kann alternativ oder zusätzlich auch ermittelt werden, wie nahe ein berechneter Wert an einem kritischen Wert liegt. Bei großer Nähe oder bei großer Standardabweichung wird auf die schlechte Qualität der Messung hingewiesen. Darüber hinaus kann auch zu einem neuen Test aufgefordert werden.

Zur Nutzung der vorliegenden Erfindung ist folglich ein Programm auf einer Rechnereinheit, beispielsweise als App auf einem Smartphone nützlich, in dem folgenden Grundfunktionen vereint werden: Einlesen von Bilddaten, Bildverarbeitung, quantitative und/oder qualitative Ausgabe eines Bildverarbeitungs- und/oder Analyseergebnisses. Zusätzlich kann das Programm eine Qualitätsanalyse bezogen auf die Qualität der Analyse einer Probe anbieten. Ferner kommt die Verknüpfung mit weiterführenden Informationen in Betracht (internen oder externen Datenbanken zu Krankheitsbildern, Adressen von medizinischen Diensten und dergleichen). Die Verknüpfung von solchen Informationen kann vom Analyseergebnis abhängig gemacht werden.

Die erfindungsgemäße mobile Rechnereinheit verfügt vorzugsweise über mindestens eine Datenanbindung, vorzugsweise auch in der Form einer Internetanbindung. Mittels dieser Anbindung können Daten auch ganz oder zum Teil außerhalb der mobilen Rechnereinheit gespeichert werden (sie müssen dabei einem einzelnen Rechner nicht klar zugeordnet sein und können z.B. in einer "Cloud" abgelegt werden). Es können Rechneroperationen über andere Rechner ausgeführt werden (hierbei kann die Rechnerleistung ebenfalls über ein geeignetes Netzwerk verfügbar sein und somit nicht vom ausgesuchten und dauerhaft bestimmten Rechner erbracht werden). Die Datenanbindung, und insbesondere die Internetanbindung, kann kabelgebunden oder kabellos erfolgen, sie kann z.B. über ein W-LAN Protokoll oder auch über ein Datennetz nach dem UMTS- oder LTE-Standard erfolgen.

Die mobile Rechnereinheit soll ferner über Eingabemöglichkeiten verfügen, beispielsweise eine Tastatur oder ein Touchscreen. Zur Datenausgabe genügt häufig ein kleiner Bildschirm (etwa mit einer Diagonalen zwischen fünf und zehn Zoll). Dort können auch Hinweise gegeben werden, ob die aufgenommen Bilddaten ausreichend gut sind, so dass erforderlichenfalls umgehend ein neues Bild aufgenommen werden kann.

Erfindungsgemäß ist daher bevorzugt, dass die mobile Rechnereinheit ein Smartphone oder Tablet-Computer ist und die Bildverarbeitungsvorrichtung eine Digitalkamera ist, die vorzugsweise in ein Smartphone oder Tablet-Computer integriert ist.

Im Rahmen dieser Erfindung bedeutet "optische Vergrößerungseinheit" eine Einheit, die mindestens ein Objektiv enthält oder eine Anordnung von einem oder mehreren Objektiven oder Linsen enthält, wie bei einem Mikroskop, die eine hinreichende Vergrößerung erlauben. Dies kann geschehen, indem die Kamera mit einem handelsüblichen Mikroskop verbunden wird. Wenn ein solches Mikroskop zum Einsatz kommt, können alternativ auch Bilddaten direkt an die Rechnereinheit übermittelt werden. Im Rahmen der vorliegenden Erfindung ist jedoch der Einsatz eines Mikroskops in der Regel nicht zwingend erforderlich. Die Kamera beispielsweise eines Smartphones kann mit einer Vergrößerungsoptik kombiniert werden.

Erfindungsgemäß bevorzugt sind Leistungen der erfindungsgemäßen optischen Vergrößerungseinheit in Gegenwart der Bildverarbeitungsvorrichtung mit Vergrößerungen von mindestens 100-fach oder mindestens 1000-fach, vorzugsweise 100-fach bis 2000-fach, insbesondere 500-fach bis 1000-fach, ggfs. mit einer Auflösung von kleiner als 0,5 µm, so dass eine hinreichende Vergrößerung von Zellen und Erregern erreicht werden kann. Dieser Vergrößerungsfaktor kann fest oder variabel sein.

Die optische Vergrößerungseinheit oder Bildverarbeitungsvorrichtung weist vorzugsweise eine oder mehrere beliebige Lichtquellen auf, wie z.B. mindestens eine Weisslicht- oder Fluoreszenzbeleuchtung, welche ggfs. als Anregungslicht für Fluoreszenzfarbstoffe (siehe unten) verwendet wird.

Der Begriff "Mittel zur Aufnahme eines Teststreifens aufweisend eine Körperflüssigkeit" bedeutet, dass mittels einer Kammer aufweisend einen Slot oder Einschub oder eine Halterung ein Teststreifen zu der optischen Vergrößerungseinheit angeordnet und fixiert werden kann, insbesondere in der Weise, dass die Bildverarbeitungsvorrichtung samt mindestens einer optischen Vergrößerungseinheit eine optische Auslesung (read-out) der Körperflüssigkeit erlaubt.

Daher betrifft die Erfindung ebenfalls einen Teststreifen, der für die Aufnahme in das Testsystem geeignet ist, wobei der Teststreifen in einer Kammer aufgenommen wird und lediglich für den Lichtweg der optischen Vergrößerungseinheit eine Öffnung neben einem Slot oder Einschub oder eine Halterung aufweist.

In einer Variante kann die Kammer aufklappbar und verschließbar sein, so dass der Teststreifen im Wege der Aufnahme abgelegt oder gehaltert werden kann (nachstehend: statische Methode).

Bevorzugt ist jedoch ein Slot oder Einschub an der Kammer, so dass eine Aufnahme des Teststreifens mittels Einschieben und eine Entnahme mittels Ausschieben erfolgen kann (nachstehend: dynamische Methode). Der Teststreifen kann daher relativ zu der erfindungsgemäßen Optik bewegt bzw. transportiert werden (supra).

Ein solcher Teststreifen ist vorzugsweise ein planarer Teststreifen, vorzugsweise bestehend aus einem oder mehreren transparenten, harten Material(ien), wie einem Kunststoff oder Glas, der in der Lage ist eine Körperflüssigkeit aufzunehmen. Weiterhin ist bevorzugt, dass der Teststreifen aus zwei aufeinander geklebten Schichten besteht, wie z.B. einem dünnen Deckglas und einem Kunststoffstreifen.

Der Teststreifen besitzt einen Proben-Port, vorzugsweise als Napf eingelassen, für die Applikation eines definierten Volumens (z.B. 25 µl, 50 µl, 100 µl) einer Körperflüssigkeitsprobe von einem Probanden, insbesondere Patienten.

Im Rahmen dieser Erfindung bedeutet "Körperflüssigkeit" nicht abschließend Blut, Vollblut, Urin, Speichel, Synovialflüssigkeit, Liquor cerebrospinalis, Plasma oder Serum oder Tränenflüssigkeit, Schweiß, Lymphflüssigkeit, Interzellularflüssigkeit.

Eine Probe einer Körperflüssigkeit eines Patienten/Probanden kann mit beliebigen Chemikalien, Reagenzien, insbesondere Färbemittel und Farbstoffe, insbesondere Fluoreszenzfarbstoffe, ggfs. samt üblichen Hilfs- und Zusatzstoffen behandelt werden.

Solche Körperflüssigkeiten enthalten Analyten, insbesondere Zellen, die ggfs. infizierte Zellen (supra) oder Erreger als solche enthalten können. "Erreger" können z.B. nicht abschließend Bakterien, Pilze, Viren und Parasiten sein.

Der Begriff "Analyten" umfasst nicht abschließend Substanzen, chemische Stoffe, solche wie gelöste Makromoleküle (Viren, Nukleinsäuren, Proteinkomplexe, Proteine, Peptide) oder auch kleine Moleküle (organische Moleküle, Hormone, Vitamine, Metabolite, Drogen) u.a.

Der Begriff "Patient" umfasst einen jeden Probanden, unabhängig von einer Symptomatik oder Krankheit und zwar Mensch und Tier, insbesondere Säugetier.

Der Proben-Port kann mit (eingetrockneten) Chemikalien (z.B. EDTA, Heparin zur Gerinnungshemmung) oder Farbstoffen zur histologischen Zellfärbung versehen werden, die durch die aufgegebene Probe einer Körperflüssigkeit gelöst werden (nachstehend: Probe).

Die Probe durchfließt in einer bevorzugten Ausführungsform den Teststreifen, insbesondere mittels mindestens eines eingearbeiteten oder aufgebrachten (Mikro)Kanals mit einem rechteckigen, trapezförmigen oder bogenförmigen Querschnitt. Der Kanal kann eine Kapillare sein oder einen Durchfluss durch Schwerkrafteinwirkung erlauben.

Daher betrifft die Erfindung ebenfalls einen Teststreifen, der einen Proben-Port und mindestens einen (Mikro)kanal enthält, insbesondere mindestens eine Kapillare.

Der Teststreifen kann ein oder mehrere Felder aufweisen, in denen spezifische Binder, wie z.B. Antikörper, Liganden, Proteine bzw. Aptamere, vorzugsweise in Form einer Monolage an einer ersten Oberfläche des Teststreifens gebunden sind. Solche Binder können beispielsweise aufgedruckt werden. Der besagte (Mikro)Kanal verläuft durch die Felder, wobei die Körperflüssigkeitsprobe mit den Bindern auf den Feldern in Kontakt treten kann.

Um einen laminaren Fluss der Zellen durch den besagten Kanal zu verhindern und die Kontaktwahrscheinlichkeit zu den Binderbeschichteten Feldern zu erhöhen, können im Kanal störende Strukturen zur Verwirbelung angebracht sein, die als runde, ovale, dreieckige, quadratische, rechteckige, mehreckige Erhebungen bevorzugt quer zur Strömungsrichtung stehen.

Die Binder erkennen die gesuchten infizierten Zellen oder Erreger anhand spezifischer Oberflächenmarker (z.B. bei Malaria das PfEMP1/knob des Plasmodiums), fangen sie aus dem Probenfluss und binden, fixieren oder immobilisieren sie im Bereich der Felder an eine erste Oberfläche des Teststreifens.

In einer besonderen Ausführungsform des erfindungsgemäßen Teststreifens können zwischen den Feldern vorzugsweise orthogonal zur Fließrichtung Balken, Markierungen aufgedruckt sein. Sie dienen der visuellen Abgrenzung der Felder für die Bildverarbeitung sowie zur Bestimmung der durch den Anwender ausgeführten Durchzugsgeschwindigkeit des Teststreifens durch eine Auswertungssoftware.

Vor oder hinter (stromabwärts oder stromaufwärts) den Feldern kann ein Barcode aufgedruckt werden, der übliche Informationen zum Teststreifen enthält, z.B. die Art des Testes (MalariaErreger, HIV oder Chargennummer) und/oder das Verfallsdatum des Teststreifens u.a.

In einer weiteren Ausführungsform kann ebenfalls ein Mimetikum eingesetzt werden, dass in der Größenordnung einer Zelle oder eines Erregers vorliegt und gleiche oder verschiedene Binder aufweist und ebenfalls von den Bindern auf mindestens einem Feld spezifisch gebunden wird.

Ein solches Mimetikum ist beispielsweise ein (Latex- oder Polystyrol-) Bead, magnetisches Kügelchen oder Sphäroid enthaltend einen gleichen oder verschiedenen Binder, welche der Probe zugesetzt wurden oder mindestens einem Feld auf dem Teststreifen vorgelegt wurden.

Mit diesem Mimetikum lassen sich aus der Körperflüssigkeit beliebige Analyten, wie gelöste Makromoleküle (Viren, Nukleinsäuren, Proteinkomplexe, Proteine, Peptide) oder auch kleine Moleküle (organische Moleküle, Hormone, Vitamine, Metabolite, Drogen) quantitativ nachweisen. Hierzu muss eine "künstliche Zelle" (Mimetikum) vorgelegt werden, an die diese löslichen Moleküle oder Viren spezifisch binden bzw. adressiert sind, so dass eine Situation entsteht, die der Präsenz von erregerspezifischen Markern an echten Zellen entspricht.

Daher betrifft die Erfindung ebenfalls ein erfindungsgemäßes Testsystem enthaltend einen Teststreifen, der ein oder mehrere Felder aufweist, die mindestens eine gleiche oder verschiedene Binder aufweisen, die geeignet sind einen oder mehrere Analyten, Zellen, Erreger zu binden, ggfs. mittels einem Mimetikum, insbesondere in Form von Beads, magnetischen Kügelchen und/oder Sphäroiden.

Erfindungsgemäß kann das Feld beliebig groß und beliebig ausgewiesen sein. Bevorzugt ist jedoch die Ausweisung mehrerer Felder, die räumlich voneinander getrennt sind.

Dies führt zu einer Anreicherung der infizierten Zellen oder Erreger auf mindestens einem dieser Felder, während die flüssige Probe der Schwer- oder Kapillarkraft folgend weiter vorzugsweise in ein Auffang-Reservoir (z.B. Schwamm, Reservoir, Vlies, Gewebe etc.) fließt. Die Zellen oder Erreger können in der Flüssigkeit ihre physiologische Form behalten.

Die Anreicherung der infizierten Zellen oder Erreger kann ebenfalls mechanisch durch ein Sieb oder Filter oder durch eine Verengung des besagten (Mikro-)Kanals erfolgen.

Ebenfalls können Zellen biologisch beispielsweise als spezifische Aggregate angereichert werden. Solche Aggregate können z.B. durch Zugabe von Fibrinogen als Roleaux von Erythrozyten erhalten werden.

Daher betrifft die Erfindung in einer weiteren Ausführungsform ein Testsystem enthaltend einen Teststreifen, wobei mindestens ein oder mehrere Analyten, Zellen oder Erreger lokalisiert werden, insbesondere mechanisch lokalisiert werden.

In einem zweiten Schritt kann die Färbung der infizierten Zellen oder Erreger durch Zugabe einer Färbelösung in den inzwischen entleerten Proben-Port erfolgen oder aus einem Blister-Depot, dass durch mechanische Einwirkung geöffnet wird und in den Kanal mündet. Die Färbung ist je nach Analyt bzw. Testausführung vorzugsweise eine einfache histologische Färbung des Zellplasmas und der DNA in den Zellkernen oder eine immunchemische Färbung (z.B. Giemsa).

Hierbei werden vorzugsweise weitere Antikörper, Peptide bzw. Aptamere (nachstehend: Färbe-Liganden) eingesetzt, die an eine zweite, unabhängige Bindungsstelle auf der Oberfläche der immobilisierten bzw. gefangenen Zellen binden. Diese Liganden sind vorzugsweise mit einem Fluoreszenz-Farbstoff gekoppelt, so dass durch ihre Bindung an die Zelloberfläche ein ausreichendes Fluoreszenzsignal entsteht und dank der optischen Vergrößerung vor dem Hintergrund sichtbar gemacht wird, so dass einzelne bildfähige Farbwerte oder Farbkontraste, wie vorstehend ausgeführt, entstehen.

Daher betrifft die Erfindung ebenfalls ein Testsystem, wobei die auf dem Teststreifen gebundenen Analyten, Zellen, Erreger mittels eines Färbe-Liganden, der an einen Farbstoff vorzugsweise einen Fluoreszenzfarbstoff gekoppelt ist, farblich markiert werden und folglich einer erfindungsgemäßen Bildauswertung zugänglich sind.

Diese doppelte Erkennung im "Sandwichsystem" einerseits durch den Binder (Fänger-Liganden) und andererseits durch den (nachfolgenden) Färbe-Liganden erlaubt eine eindeutige Typisierung der infizierten Zellen oder Erreger und schließt Falsch-Positive durch eine unspezifische Bindung anderer Zellen aus.

Entsprechende Binder (Fänger-Liganden) und Färbe-Liganden für Zellen und Erreger sind in der Literatur beschrieben und können vom Fachmann entsprechend eingesetzt werden. Beispielsweise weisen infizierte Zellen (Malaria, Cholera, etc.) entsprechende Oberflächenmarker auf, die von den Bindern (Fänger-Liganden und Färbe-Liganden) erkannt werden können.

Das Verfahren ermöglicht die Anreicherung und eindeutige visuelle Erkennung von Zelltypen wie z.B. Malaria-infizierten Erythrozyten, CD4+ Zellen oder ebenfalls infizierten Zellen in der HIV-Diagnostik, ebenfalls die Erkennung und Typisierung von Bakterien in der Diagnose von z.B. Sepsis, Cholera, Tuberkulose etc.

Die Anreicherung und Erkennung ist sogar im Multiplex für eine Vielzahl von Zelltypen oder Erregern möglich. Hierzu werden im (Mikro)Kanal verschiedene Felder mit jeweils verschiedenen Bindern beschichtet, die jeweils einen gewünschten Zelltyp oder Erreger spezifisch fangen (capture) und anreichern. Die immunchemische Markierung erfolgt mittels Durchfluss eines Gemisches von vorzugsweise fluoreszenzmarkierten Liganden für alle gewünschten Zelltypen oder Erreger, die hierdurch spezifisch angefärbt werden.

Das Hintergrundsignal der spezifischen Markierung durch die z.B. im Kanal verbleibende Färbelösung ist bei der Messung nicht relevant, da die Färbelösung vorzugsweise niedrig konzentriert sein soll. Z.B.: Bei einem Volumen in dem Mikrokanal (Kapillare) (0,1 mm x 0,02 mm x 50 mm) von 0,1 µl und über einem Feld (0,1mm x 0,1mm x 0,2mm) von 0,0002 µl und eingesetzten 50 µl niedrig-konzentrierter Färbelösung wird diese in der Kapillare 500-fach und über einem Feld 250.000-fach ausgetauscht.

Der Teststreifen erlaubt daher nach Probenzugabe im ersten Durchflussschritt die spezifische Anreicherung und Immobilisierung von bestimmten Zellen oder Erregern aus der Körperflüssigkeitsprobe. Durch zumeist nachfolgende Zugabe einer Färbelösung werden sowohl alle nicht gebundenen, restlichen Zellen aus dem Mikrokanal gewaschen, als auch die Zellen oder Erreger vorzugsweise spezifisch mit einem (Fluoreszenz-)Farbstoff markiert. Besonders vorteilhaft ist, dass erfindungsgemäß kein zusätzlicher Waschschritt erforderlich sein kann.

Zur weiteren Verstärkung des Farbsignals können Polymere, vorzugsweise Dendrimere verwendet werden, die an ihren bis zu 1.000 Enden je einen intensiv leuchtenden Fluorophor tragen (auch "Verstärker-Komplex" genannt).

Solche Dendrimere sind zusätzlich zu den Fluorophoren mit weiteren Liganden wie Antikörpern, Peptiden, Aptameren versehen. Die entstehenden Moleküle ähneln somit den o.g. Färbeliganden, allerdings mit einer viel höheren Anzahl von Fluorophoren pro Molekül. Ferner können verschiedene Dendrimere verwendet werden, die verschiedene Fluorophore aufweisen, die spezifisch mit derselben oder verschiedenen bestimmten Wellenlängen anzuregen sind und mit Maxima verschiedener Wellenlängen fluoreszieren.

Sobald sich die Färbeflüssigkeit im Kanal vollständig verteilt, bzw. ihn durchflossen hat, befinden sich ungebundene Färbe-Liganden, ggfs. verstärkt mit Dendrimeren gleichmäßig verteilt im Kanal.

Zellen, die auf den Feldern im Kanal immobilisiert sind, tragen an Markern gebundene Färbe-Liganden auf ihren Oberflächen. Die Konzentration der Färbe-Liganden in der Färbeflüssigkeit ist vorzugsweise in der Weise gewählt, dass Färbe-Liganden an den infizierten Zellen, Erregern gegenüber den freien, in der Flüssigkeit vorhanden Färbe-Liganden angereichert werden.

Dadurch erscheinen infizierte Zellen im Kontrast als heller gefärbte/fluoreszierende Punkte bzw. Flächen vor einem gefärbten/fluoreszierenden Hintergrund, während nicht infizierte Zellen unsichtbar bleiben.

In Gegenwart einer (Anregungs-)Beleuchtung kann die erfindungsgemäße Bildauswertung der Farbkontraste von heller gefärbten/fluoreszierenden Zellen vor einem gefärbten/fluoreszierenden Hintergrund erfolgen. Durch die Bestimmung hellerer Punkte bzw. Flächen lässt sich die Zahl der infizierten Zellen pro Volumen Probe durch Zählen und Berechnung (Integration, supra) ermitteln, da das Probenvolumen und die Bindungseffizienz der Felder bekannt sind. Ggfs. ist eine Kalibrierung erforderlich.

Aufgrund der vorstehenden Maßnahmen kann bei Aufnahme des probebeladenen Teststreifens in das Testsystem eine hinreichende Farbintensität und Farbkontrastwirkung samt hinreichenden Farbwerten für ein oder mehrere Bild(er) erhalten werden, welches über die erfindungsgemäße optische Vergrößerungseinheit und Bildverarbeitungsvorrichtung in der mobilen Rechnereinheit ausgelesen werden kann, wie vorstehend ausgeführt, so dass eine effektive Bildverarbeitung erfolgen kann.

Im Fall der o.g. "statischen Methode" können Bilder oder Serienbilder (auch Video) mit hinreichender diagnostischer Aussage erhalten werden, wobei eine qualitative Analytik oder Diagnostik ermöglicht wird. Beispielsweise kann die Aussage lauten, dass ein Malariaerreger in der Körperflüssigkeit vorhanden ist.

Besonders bevorzugt ist jedoch die o.g. "dynamische Methode", wobei in einer Bilderserie oder Videosequenz die optische Auslesung mehrerer Felder des Teststreifens erfolgen kann. Der Teststreifen soll vorzugsweise gleichmäßig relativ zur optischen Vergrößerungseinheit transportiert/bewegt werden. Dies kann einfachhalber durch vorsichtiges manuelles Herausziehen des Teststreifens erfolgen oder insbesondere mittels einem elektromotorgetriebenen Transport, einen Federaufzugmotor oder einer Gasdruckfeder, die durch das Einschieben komprimiert wird.

Daher betrifft die Erfindung ebenfalls ein Verfahren, wobei ein Testsystem umfassend eine
i.) mobile Rechnereinheit
ii.) eine Bildverarbeitungsvorrichtung angeordnet an mindestens einer optischen Vergrößerungseinheit und
iii.) Mittel zur Auf(- und Ent)nahme eines Teststreifens aufweisend eine Körperflüssigkeit einer (Patienten-/Probanden-) Probe oder eine vorstehend beschriebene Ausführungsform, wobei im Wesentlichen
   a.) Eine Körperflüssigkeit auf einen Teststreifen aufgebracht wird, wobei
      i.) mindestens ein oder mehrere Analyten, Zellen, Erreger auf dem Teststreifen lokalisiert sind und/oder ii.) mindestens ein Binder lokalisiert auf dem Teststreifen einen Analyten, Zellen, Erreger bindet,
   b.) Ein Farbstoff auf den Teststreifen aufgebracht wird, wobei ein oder mehrere Analyten, Zellen, Erreger aus a.) farblich markiert werden,
   c.) Zumindest ein Kontrastbild aus b.) einer Bildverarbeitung zugänglich ist und in der mobilen Rechnereinheit ausgewertet wird.

Das Verfahren ist z.B. geeignet, Analyten, Zellen, Erreger hinreichend zu identifizieren.

Weiterhin ist bevorzugt, dass der Teststreifen relativ zur erfindungsgemäßen Optik, insbesondere zur optischen Vergrößerung, transportiert oder bewegt wird (so genannte "dynamische Methode").

Daher betrifft die Erfindung einen zusätzlichen optionalen Verfahrensschritt b'.), wobei der Teststreifen relativ zur erfindungsgemäßen Optik, insbesondere zur optischen Vergrößerung, transportiert oder bewegt wird.

Die optische Vergrößerungseinheit samt Mittel zur Aufnahme eines Teststreifens aufweisend eine Körperflüssigkeit können Gegenstand eines Aufsatzes für die mobile Rechnereinheit, wie z.B. ein Smartphone, sein oder in Form einer Docking-Station (mittels Connector/Schnittstellenstecker oder drahtlos) oder Bluetooth®- oder WLAN-Gerät sein.

Der Aufsatz wird im Fall eines Smartphone oder Tablet-Computer in der Regel zumindest Teile der Rückenfläche abdecken. Er kann mechanisch, magnetisch und lösbar mit dem Smartphone oder Tablet-Computer verbunden werden. Ein Aufsatz kann auch in Form eines Tischständers (beispielsweise einer "Docking-Station") angeboten werden. Der Tischständer kann über eine eine eigene (aufladbare) Stromversorgung verfügen und auch zusätzliche Funktionen übernehmen, beispielsweise als Ladestation für das Smartphone oder Tablet-Computer dienen. Ein Tischständer oder sonstiger Aufsatz kann unabhängig von einem Smartphone oder Tablet-Computer verkauft werden und wird zusammen mit einem gängigen Smartphone oder Tablet-Computer zu einer leistungsfähigen Analysestation.
Das Testsystem kann durch vorstehende Merkmale entsprechend ausgebildet sein, auch wenn diese Merkmale im Bezug zum erfindungsgemäßen Verfahren stehen.

Daher betrifft die Erfindung einen Aufsatz oder Tischständer, insbesondere in der Ausführungsform einer Docking-Station enthaltend eine optische Vergrößerung samt Mittel zur Aufnahme eines Teststreifens wie vorstehend beschrieben, welche mit einer mobilen Rechnereinheit enthaltend eine Bildverarbeitungsvorrichtung verbunden wird/werden kann.

Weiterhin betrifft die Erfindung die Verwendung eines erfindungsgemäßen Testsystems oder Testverfahren zur Diagnose von Erkrankungen aller Art, wobei mittels Auswertung und erfindungsgemäßer Identifizierung von infizierten Zellen, Erreger, aussagekräftigen Analyten auf eine Erkrankung eines Patienten/Probanden geschlossen werden kann.

### Beispiele und Figuren:

Diese Beispiele dienen ausschließlich zur Erläuterung der Erfindung, ohne die Erfindung auf diese Beispiele zu beschränken.

### Beschreibung der Figuren:

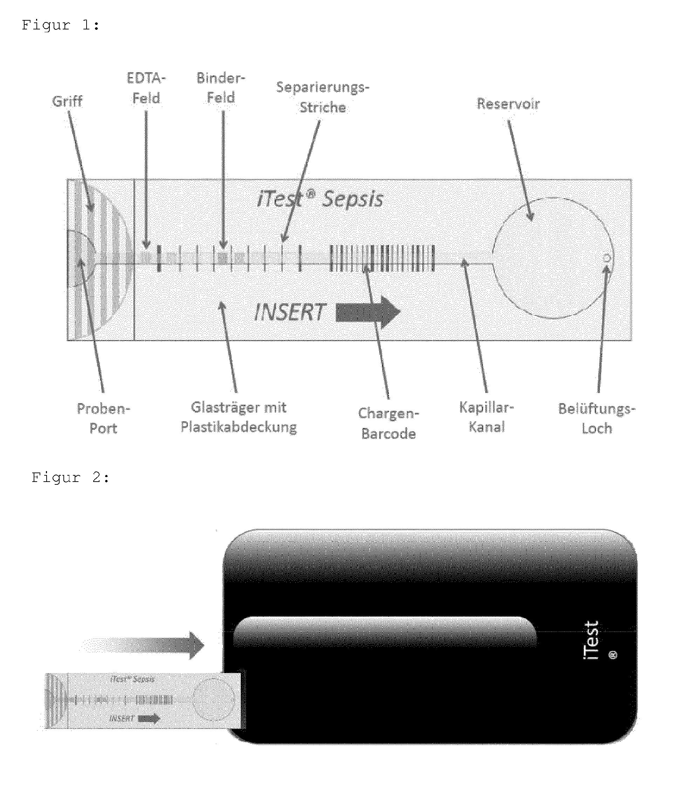

Figur 1 beschreibt eine bevorzugte Ausführungsform eines erfindungsgemäßen Teststreifens.
Figur 2 zeigt die Aufnahme eines Teststreifens in die erfindungsgemäße Vorrichtung unter Verwendung eines Smartphone (unten), wobei über die Digitalkamera eine optische Vergrößerung samt geeigneter Kammer angeordnet ist.

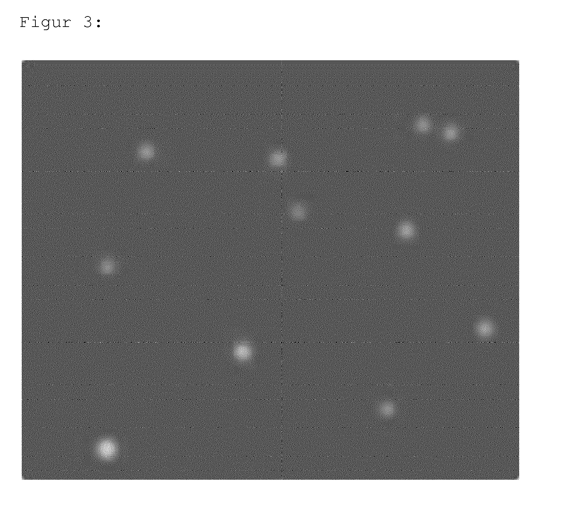

Figur 3 zeigt ein Beispiel eines hinreichenden Kontrastbildes, wobei die Helligkeitsunterschiede in zugeordneten Farbwerten einer erfindungsgemäßen Bildauswertung zugänglich ist.

## Patentansprüche

1. Testsystem umfassend eine
i.) mobile Rechnereinheit
ii.) eine Bildverarbeitungsvorrichtung angeordnet an mindestens einer optischen Vergrößerungseinheit und
iii.) Mittel zur Aufnahme eines Teststreifens aufweisend eine Körperflüssigkeit.

2. Testsystem nach Anspruch 1, **dadurch gekennzeichnet, dass** der Teststreifen in der Weise angeordnet ist, dass die Bildverarbeitungsvorrichtung samt mindestens einer optischen Vergrößerungseinheit eine optische Auslesung (read-out) der Körperflüssigkeit erlaubt.

3. Testsystem nach Anspruch 1 oder 2, **dadurch gekennzeichnet, dass** die mobile Rechnereinheit ein Smartphone oder Tablet-Computer ist und die Bildverarbeitungsvorrichtung eine Digitalkamera ist, die in das Smartphone oder Tablet-Computer integriert ist.

4. Testsystem nach einem der vorstehenden Ansprüche, wobei die optische Vergrößerungseinheit mindestens ein Objektiv oder eine Anordnung von einem oder mehreren Objektiven oder Linsen enthält, insbesondere in Form eines Mikroskops.

5. Testsystem nach einem der vorstehenden Ansprüche, wobei die optische Vergrößerungseinheit in Gegenwart der Bildverarbeitungsvorrichtung Vergrößerungen von mindestens 100-fach oder mindestens 1000-fach erreicht.

6. Testsystem nach einem der vorstehenden Ansprüche, wobei die optische Vergrößerungseinheit oder Bildverarbeitungsvorrichtung eine oder mehrere beliebige Lichtquellen aufweist, insbesondere mindestens eine Weisslicht- oder Fluoreszenzbeleuchtung.

7. Testsystem nach einem der vorstehenden Ansprüche, wobei Mittel zur Aufnahme eines Teststreifens aufweisend eine Körperflüssigkeit eine Kammer enthaltend einen Slot oder Einschub oder eine Halterung für einen Teststreifen ist.

8. Testsystem nach einem der vorstehenden Ansprüche, enthaltend einen Teststreifen, wobei ein Ein- oder Ausziehen des Teststreifens über einen Slot oder Einschub mittels einem elektromotorgetriebenen Transport, einen Federaufzugmotor oder einer Gasdruckfeder erfolgt.

9. Testsystem nach einem der vorstehenden Ansprüche, enthaltend einen Teststreifen, wobei Analyten, Zellen, Erreger auf dem Teststreifen lokalisiert und angereichert werden können.

10. Testsystem nach einem der vorstehenden Ansprüche, enthaltend einen Teststreifen, der ein oder mehrere Felder aufweist, die mindestens gleiche oder verschiedene Binder aufweisen, die geeignet sind, einen oder mehrere Analyten, Zellen, Erreger zu binden, ggfs. mittels eines Mimetikums, insbesondere in Form von Beads, magnetische Kügelchen und Sphäroiden.

11. Testsystem nach einem der vorstehenden Ansprüche, enthaltend einen Teststreifen, **dadurch gekennzeichnet, dass** der Teststreifen einen Proben-Port und mindestens einen (Mikro)kanal enthält, insbesondere mindestens eine Kapillare, ggfs. samt Markierungen und / oder Barcode.

12. Testsystem nach einem der vorstehenden Ansprüche, enthaltend einen Teststreifen, wobei die auf dem Teststreifen enthaltenen Analyten, Zellen, Erreger, mittels eines Färbe-Liganden wie Antikörper, Aptamer, Peptidligand, der an einen Farbstoff, vorzugsweise einen Fluoreszenzfarbstoff gekoppelt ist, farblich markiert werden.

13. Testsystem enthaltend einen Teststreifen, wobei der Färbe-Ligand einen Verstärker-Komplex aus einem Polymer, das mit einer Vielzahl von Fluorophoren markiert ist, enthält.

14. Testverfahren zur Durchführung an einem Testsystem nach einem der vorstehenden Ansprüche umfassend die Schritte:
a.) Eine Körperflüssigkeit wird auf einen Teststreifen aufgebracht, wobei
i.) mindestens ein oder mehrere Analyten, Zellen, Erreger auf dem Teststreifen lokalisiert sind und/oder ii.) mindestens ein Binder lokalisiert auf dem Teststreifen einen Analyten, Zellen, Erreger bindet,
b.) Ein Farbstoff wird auf den Teststreifen aufgebracht, wobei ein oder mehrere Analyten, Zellen, Erreger aus a.) farblich markiert wird,
c.) Optional, der Teststreifen relativ zur optischen Vergrößerung, transportiert oder bewegt wird.
d.) Zumindest ein Kontrastbild aus b.) einer Bildverarbeitung zugänglich ist und in der mobilen Rechnereinheit ausgewertet wird.

15. Verwendung eines Testsystems oder Testverfahrens nach einem der vorstehenden Ansprüche zur Diagnose von Erkrankungen.

16. Aufsatz oder Tischständer, insbesondere eine Docking-Station enthaltend eine optische Vergrößerung samt Mittel zur Aufnahme eines Teststreifens, **dadurch gekennzeichnet, dass** diese mit einer mobilen Rechnereinheit enthaltend eine Bildverarbeitungsvorrichtung, insbesondere in Form eines Smartphone oder Tablet-Computer, verbunden werden kann.
